Europäisches Patentamt

European Patent Office

Office européen des brevets

(19)

(11) Publication number: **0 408 747 A1**

## EUROPEAN PATENT APPLICATION
### published in accordance with Art. 158(3) EPC

(12)

(21) Application number: 89902544.9

(22) Date of filing: 20.02.89

(86) International application number:
PCT/JP89/00165

(87) International publication number:
WO 89/07383 (24.08.89 89/20)

(51) Int. Cl.⁵: **G01B 11/00**

(30) Priority: 19.02.88 JP 35040/88

(43) Date of publication of application:
**23.01.91 Bulletin 91/04**

(84) Designated Contracting States:
**DE FR GB IT**

(71) Applicant: **KITAMURA MACHINERY CO., LTD.**
**1870, Toide Komyoji**
**Takaoka-shi, Toyama-ken 939-11(JP)**

(72) Inventor: **KITAMURA, Koichiro**
**11-5, Ekinan 3-chome, Takaoka-shi**
**Toyama-ken 933(JP)**

(74) Representative: **Witte, Alexander, Dr.-Ing. et al**
**Witte, Weller & Hilgenfeldt Patent- und**
**Rechtsanwälte Augustenstrasse 7e 7**
**D-7000 Stuttgart 1(DE)**

(54) LENGTH MEASURING METHOD BY USING LASER BEAMS.

(57) A conventional laser beam such as a He-Ne laser beam is not good for measuring a length. This invention is accomplished so as to solve the problem.

According to this invention a laser reference wave generated by a laser beam source and a laser measuring wave reflected from a measuring target are received to obtain an interference wave. A sine wave is formed from the interference wave and used to generate pulses. A A-phase pulse and a B-phase pulse having a phase difference to each other are generated from the pulses. Counting pulses corresponding to the moving length of a measuring target are generated on both rise time and fall time of the A-phase and the B-phase pulse. When the frequency of the measuring wave is higher than that of the reference wave, the generated counting pulses are upcounted. On the other hand, when the frequency of the measuring wave is lower than that of the reference wave, the generated counting pulses are down-counted.

TITLE MODIFIED
see front page

- 1 -

A Method For Length-measuring By Laser

Field Of The Invention

This invention relates to a method for measuring length by a laser.

Background Of The Invention

A table-drive motor in a machine tool or the like is equipped with a pulse encoder in order to provide a positioning control thereof. A feedback control signal is obtained by counting output signals from the pulse encoder. However, the pulse encoder is directly connected to the drive motor. Therefore, when the drive system including the drive motor is not a high precision system or has a slack portion, the distance or length between an actual position and a calculated position given by a counter of a computer is great. Thus, the positioning control does not accurately perform. In addition, the positioning control is affected by the accuracy of the pulse encoder.

Therefore, it has been proposed that a Michelson interferometer type laser length-measuring apparatus, for example, is used to provide the positioning operation of a movable table of a machine tool. A laser beam from a laser beam source is split into two laser beams by a beam splitter. One of the two laser beams travels to a mirror set on the movable table, while another laser beam travels to a fixed mirror. The laser beam reflected from the mirror set on the movable table and the laser beam reflected from the fixed mirror are superimposed through the beam splitter and interfere with each other. The reference wave length of the laser beam is available for measuring the length from the mirror on the movable table by using the interference of the laser beams.

A He-Ne laser is generally used as a laser beam source which is compact in size and reliable. The He-Ne laser can generate a laser beam having a wave length of 0.6328 $\mu$m. However, the laser beam cannot be used for producing the feedback signal because the wave length of 0.6328 $\mu$m has a large number of figures in four decimal places.

A laser beam having the wave length of 0.6328 $\mu$m can be technically converted via an optical system into a beam having a wave length of 0.32 $\mu$m and a frequency of 500 kHz.

Disclosure Of The Invention

This invention relates to a method for length measuring by laser in which it is easy to measure the length with a laser beam having a converted wave length.

According to this invention, a laser reference wave generated by a laser beam source and a laser measuring wave generated by and then reflected from a measuring target are received to obtain an interference wave. A sine wave is formed from the interference wave and is used to generate pulses. An A-phase pulse and a B-phase pulse having a phase difference relative to each other are generated from the pulses. Counting pulses corresponding to the moving length of a measuring target are generated on both the rise time and the fall time of the A-phase pulse and the B-phase pulse. When the frequency of the measuring wave is higher than that of the reference wave, the generated counting pulses are upcounted. On the other hand, when the frequency of the measuring wave is lower than that of the reference wave, the generated counting pulses are down-counted.

Brief Description Of The Drawings

Fig. 1 shows a machining center for performing a method for length-measuring by laser according to the invention.

Fig. 2 is a side view of the machining center.

Fig. 3 shows a part of the machining center.

Fig. 4 shows an optical system and a processing means according to the invention.

Fig. 5 shows a flowchart for processing according to the invention.

Fig. 6 shows waveforms according to the invention.

Detailed Description of the Preferred Embodiments

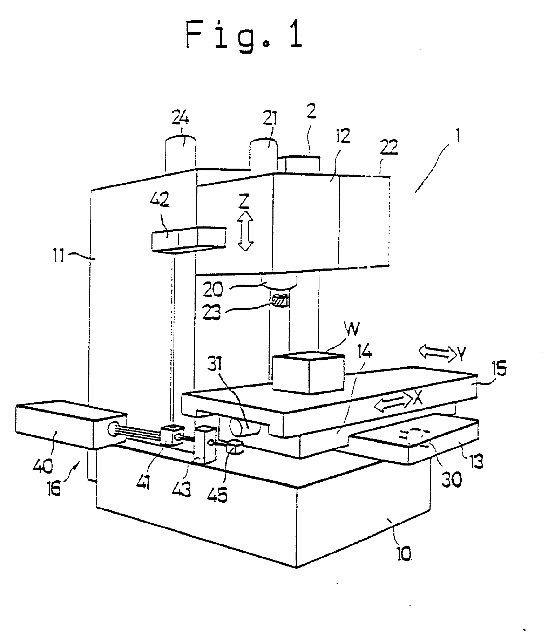

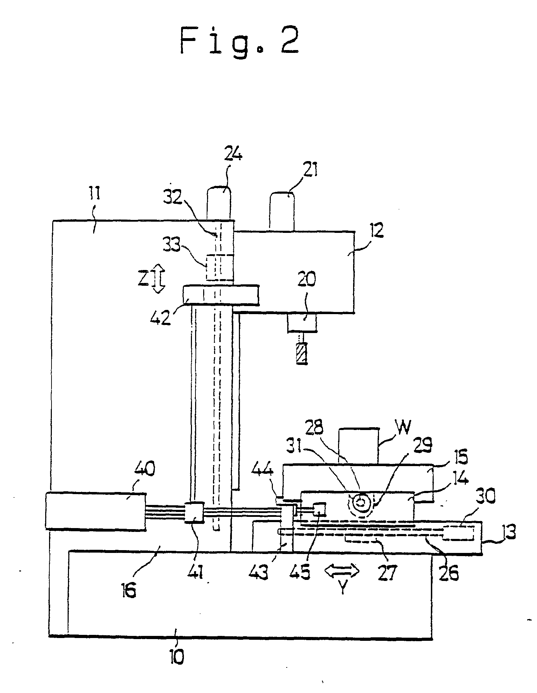

Figs. 1 and 2 show a machining center for performing a method for length-measuring by a laser according to the invention. The machining center comprises a base 10, a column 11, the CNC unit 2, a spindlehead 12, saddles 13, 14, a table 15 and a laser length-measuring apparatus generally indicated by the reference numeral 16. The spindlehead 12 has a spindle 20, tools 23, a main motor 21, and an automatic tool changer 22.

The column 11 of the machining center is provided with a servomotor 24. A laser head 40 and a polarization beam splitter 41 of the laser length-measuring apparatus 16 are fixed to a side of the column 11. A corner cube 42 is fixed to the spindlehead 12.

The saddle 13 is fixed on the base 10. The saddle 14 is slidably supported on the saddle 13. The table 15 is slidably supported on the saddle 14. A workpiece W is detachedly fixed on the table 15. A servomotor 30 is equipped within the saddle 13. The saddle 14 is provided with a servomotor 31.

As best seen in Fig. 2, a feed screw 32 is connected with respect to a servomotor 24. A nut 33 engages the feed screw 32. Therefore, the spindlehead 12 can be moved in the direction of arrow Z by actuating the servomotor 24.

In addition, a feed screw 26 is connected with a servomotor 30. A nut 27 engages the feed screw 26 and is fixed to the saddle 14. The saddle 14, therefore, can be moved in the Y direction by actuating the servomotor 30.

Furthermore, a feed screw 28 is connected with a servomotor 31. A nut 29 fixed to the table 15 engages the feed screw 28. Therefore, the table 15 can be moved in the X direction (see Fig. 1) by actuating the servomotor 31.

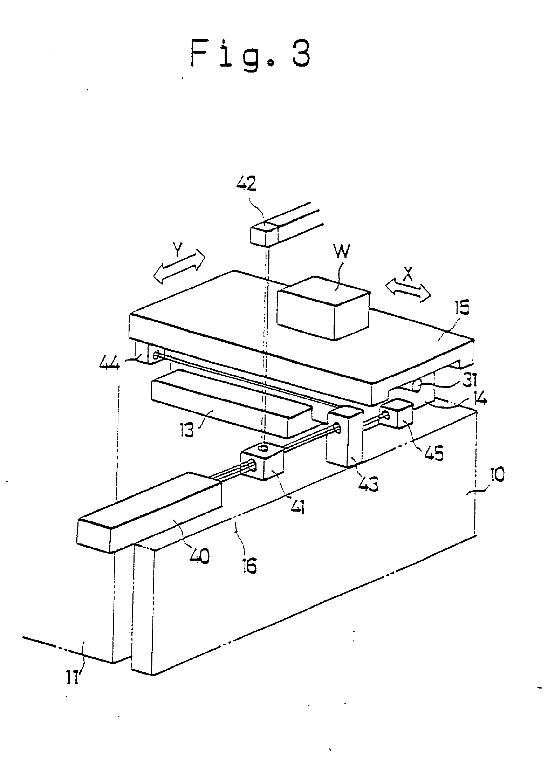

As seen in Figs. 1 and 3, a beam splitter 43 is fixed on the base 10. A corner cube 45 is also fixed to the saddle 14. A corner cube 44 is fixed to the table 15.

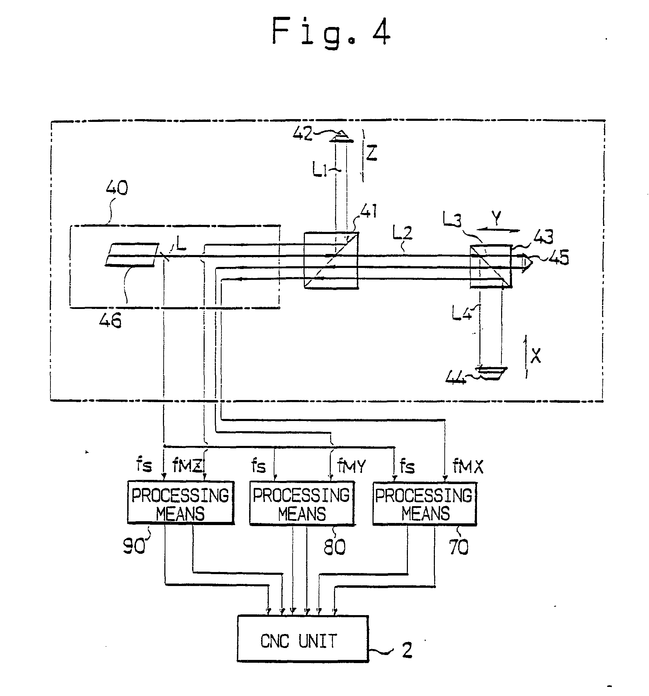

As shown in Fig. 4, a laser beam L from the laser beam source 46 is split into two laser beams L1 and L2. The laser beam L1 is reflected from a corner cube 42 and travels through a polarization beam splitter 41 to a processing means 90.

The laser beam L2 is split into laser beams L3 and L4 by the beam splitter 43. The laser beam L3 is reflected from the corner cube 45 and travels through the beam splitter 43 and the polarization beam splitter 41 to a processing means 80. The laser beam L4 is reflected from the corner cube 44 to the beam splitter 43. The laser beam L4 is then reflected from the beam splitter 43 and travels to a processing means 70.

The processing means 70 receives a measuring wave $f_{MX}$ and a reference wave $f_s$. The measuring wave $f_{MX}$ relates to a moving length of the table in the X-direction. The reference wave $f_s$ is obtained from the laser beam source 46 of the laser head 40. Similarly, the processing means 80 receives a measuring wave $f_{MY}$ and the reference wave $f_s$. The measuring wave $f_{MY}$ relates to a moving length of the table along the Y-direction. The processing means 90 receives a measuring wave $f_{MY}$ and the reference wave fs. The measuring wave $f_{MY}$ relates to a moving length of the spindlehead along the Z-direction. The processing means 70, 80, 90 are electrically connected to the CNC unit 2.

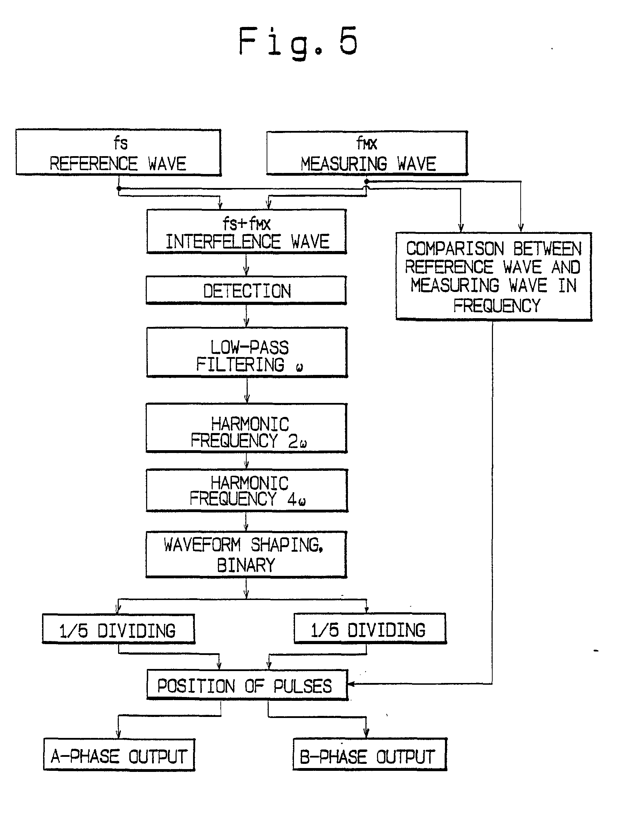

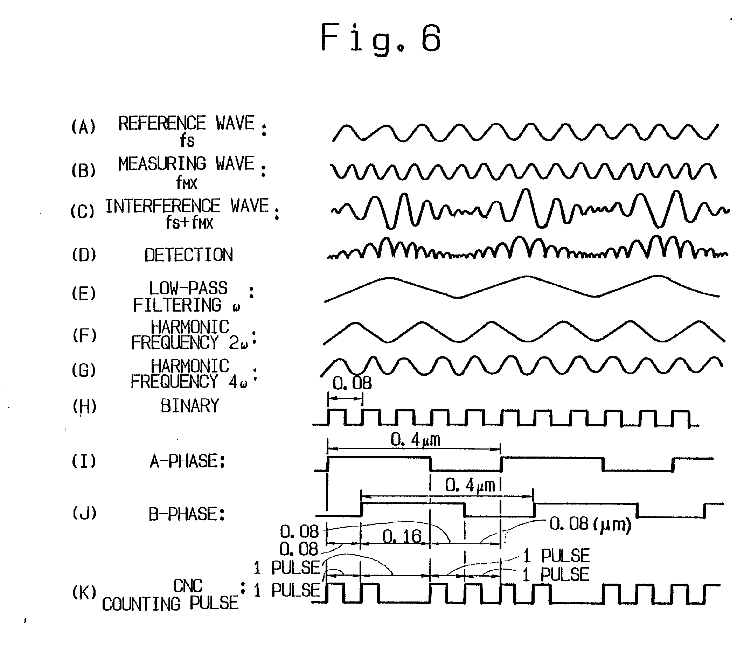

The processing means 70, 80, 90 may operate in the same operating manner. However, in Figs. 5 and 6, discussion will be directed to the operation of the processing means 70.

The processing means 70 is designed to provide an interference wave $f_s + f_{MX}$ (see Fig. 6(C)) on the basis of both the reference wave $f_s$ (see Fig. 6(A)) and the measuring wave $f_{MX}$ (see Fig. 6(B)). The detection of the interference wave (see Fig. 6(D)) is performed so as to eliminate the negative cycle component of the interference wave. The interference wave is then processed by means of a low-pass filter. Therefore, a sine wave having a wave length of 0.32 $\mu$m is obtained (see Fig. 6(E)). Thereafter, the frequency of the sine wave in Fig. 6(F) is a harmonic frequency of the sine wave in Fig. 6(E). The frequency of the sine wave in Fig. 6(G) is a harmonic frequency of the sine wave in Fig. 6(F). Therefore, the frequency of the sine wave in Fig. 6(G) is four times that of the sine wave in Fig. 6(E), that is, the wave length of the sine wave in Fig. 6(G) is 0.08 $\mu$m.

The waveform-shaping operation of the sine wave having a wave length of 0.08 $\mu$m (Fig. 6(G) is performed so as to produce a binary condition (see Fig. 6(H)).

The A-phase pulse having a wavelength of 0.4 $\mu$m and the B-phase pulse having a wavelength of 0.4 $\mu$m are in each case produced by counting five pulses (see Figs. 6(I), (J) and (K)). The B-phase pulse is delayed with respect to the A-phase pulse only by 1 pulse having a length of 0.08 $\mu$m.

When the CNC unit 2 (see Fig. 4) receives the A-phase pulse and B-phase pulse, the CNC unit 2 produces counting pulses when both the A-phase pulse and B-phase pulse rise or fall. Therefore, in the CNC unit 2, for example, as shown in Figs. 6(I) and (J), a first counting pulse having a length of 0.08 $\mu$m, a second counting pulse having a length of 0.16 $\mu$m, a third counting pulse having length of 0.08 $\mu$m and a fourth counting pulse having a length of 0.08 $\mu$m are produced with respect to the A-phase pulse and the B-phase pulse. Therefore, for example, the first counting pulse has an error of -0.02 $\mu$m with respect to the ideal pulse having a length of 0.1 $\mu$m, while the second counting pulse has an error of -0.06 $\mu$m with respect to the ideal pulse.

In addition, when the frequency of the measuring wave $f_{MX}$ is higher than the frequency of the reference wave $f_s$ namely when the table is optically moved toward the laser head, the counting pulses in Fig. 6(K) are added or upcounted. Conversely, when the frequency of the measuring wave $f_{MX}$ is lower than the frequency of the reference wave $f_{s'}$ namely when the table is moved in the reverse direction, the counting pulses in Fig. 6(K) are subtracted or down counted. Thus, the moving length (or distance) of the table in the X direction can be obtained. Both the moving length of the table in the Y direction and the moving length of the spindlehead in the Z direction can be obtained in the same manner.

- 8 -

It should be recognized that the laser beam source is not limited to the He-Ne laser. It is conceivable to use other lasers.

Industrial Applicability

According to this invention, the laser beam having a relatively large number of figures over four decimal places, such as the He-Ne laser beam, can be used for measuring a length or distance, whereby measurement of length by using a laser is easily performed.

WE HAVE CLAIMED:

1. A method for measuring length by a laser, comprising the steps of:

receiving a laser reference wave generated by a laser beam source and a laser measuring wave reflected from a measuring target so as to obtain an interference wave;

forming a sine wave from the interference wave;

generating pulses from the sine wave;

generating an A-phase pulse and a B-phase pulse having a phase difference relative to each other from the generated pulses;

generating counting pulses corresponding to a moving length of the measuring target on both rise time and fall time of the A-phase pulse and the B-phase pulse;

adding the generated counting pulses when the frequency of the measuring wave is higher than that of the reference wave; and

subtracting the generated counting pulses when the frequency of the measuring wave is lower than that of the reference wave.

DRAWINGS

# Fig. 1

# Fig. 2

# Fig. 3

# Fig. 4

# Fig. 5

```
┌──────────────────┐      ┌──────────────────┐
│       fs         │      │       fMX        │
│ REFERENCE WAVE   │      │ MEASURING WAVE   │
└──────────────────┘      └──────────────────┘
              │                 │
              │                 │
         ┌──────────────────┐                    │
         │     fs+fMX       │                     │
         │ INTERFELENCE WAVE│        ┌──────────────────────┐
         └──────────────────┘        │ COMPARISON BETWEEN   │
                  │                   │ REFERENCE WAVE AND   │
         ┌──────────────────┐        │ MEASURING WAVE IN    │
         │    DETECTION     │        │     FREQUENCY        │
         └──────────────────┘        └──────────────────────┘
                  │                            │
         ┌──────────────────┐
         │    LOW-PASS      │
         │  FILTERING ω     │
         └──────────────────┘
                  │
         ┌──────────────────┐
         │    HARMONIC      │
         │ FREQUENCY 2ω     │
         └──────────────────┘
                  │
         ┌──────────────────┐
         │    HARMONIC      │
         │ FREQUENCY 4ω     │
         └──────────────────┘
                  │
         ┌──────────────────┐
         │ WAVEFORM SHAPING,│
         │     BINARY       │
         └──────────────────┘
              │          │
    ┌──────────────┐  ┌──────────────┐
    │ 1/5 DIVIDING │  │ 1/5 DIVIDING │
    └──────────────┘  └──────────────┘
              │          │
         ┌──────────────────────┐
         │ POSITION OF PULSES   │◀──
         └──────────────────────┘
              │          │
    ┌────────────────┐  ┌────────────────┐
    │ A-PHASE OUTPUT │  │ B-PHASE OUTPUT │
    └────────────────┘  └────────────────┘
```

# Fig. 6

(A) REFERENCE WAVE :
    fs

(B) MEASURING WAVE :
    fMX

(C) INTERFERENCE WAVE :
    fs+fMX

(D) DETECTION

(E) LOW-PASS :
    FILTERING ω

(F) HARMONIC :
    FREQUENCY 2ω

(G) HARMONIC :
    FREQUENCY 4ω

(H) BINARY

(I) A-PHASE:

(J) B-PHASE:

(K) CNC : 1 PULSE
    COUNTING PULSE

EP 0 408 747 A1

# 特 許 協 力 条 約

0990 2040

## 国際調査報告を作成しない旨の決定

（法第8条第2項）
〔PCT17条(2)(a)〕

| 国 際 出 願 の 表 示 | 出願人又は代理人の書類記号 | **KTMR200** |
|---|---|---|
| 国際出願番号<br>**PCT/JP　89/00165** | 国際出願日<br>**20.02.89** | |
| 管理官庁<br>日本国特許庁（RO/JP） | 優先権の主張の基礎となる出願の日<br>**19.02.88** | |
| 出 願 人（氏名又は名称）　**キ タ ム ラ 機 械 株 式 会 社** | | |

### 決　　　　定

この国際出願については、次の理由により国際調査報告を作成しない旨の決定をする。

1. この国際出願は、次の事項を内容としている。

    a. ☐ 科学の理論

    b. ☐ 数学の理論

    c. ☐ 植物の品種

    d. ☐ 動物の品種

    e. ☐ 植物及び動物の生産の本質的に生物学的な方法（微生物学的方法による生産物及び微生物学的方法を除く。）

    f. ☐ 事業活動に関する計画、法則又は方法

    g. ☐ 純粋に精神的な行為の遂行に関する計画、法則又は方法

    h. ☐ 遊戯に関する計画、法則又は方法

    i. ☐ 人の身体の手術又は治療による処置方法

    j. ☐ 動物の身体の手術又は治療による処置方法

    k. ☐ 人又は動物の身体の診断方法

    l. ☐ 情報の単なる提示

    m. ☐ コンピューター・プログラム

2. この国際出願の次の部分が所定の要件を満たしていないので、有効な国際調査をすることができない。

    a. ☑ 明　細　書

    b. ☑ 請　求　の　範　囲

    c. ☐ 図　　　面

   附　記

   明細書2頁には「波長を0.32μmに、周波数を500KHzにそれぞれ変換することが技術的に可能となっている」旨の記載があ

### 認　　　　　証

| 国際調査機関<br>日本国特許庁（ISA/JP） | 発 送 日<br>**24.04.89** | 権限のある職員<br>特許庁審査官<br>津　田　俊　明 | 2F 7625 |
|---|---|---|---|

様式PCT／ISA／203(1977年6月)